(19) Europäisches Patentamt
European Patent Office
Office européen des brevets

(11) **EP 1 759 102 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(21) Anmeldenummer: **05756083.1**

(22) Anmeldetag: **18.06.2005**

(51) Int Cl.:
*F02B 37/02* (2006.01)     *F02B 37/22* (2006.01)
*F02M 25/07* (2006.01)     *F01D 5/14* (2006.01)
*F02B 29/04* (2006.01)

(86) Internationale Anmeldenummer:
**PCT/EP2005/006610**

(87) Internationale Veröffentlichungsnummer:
**WO 2006/000361 (05.01.2006 Gazette 2006/01)**

(54) **ABGASTURBOLADER FÜR EINE HUBKOLBEN BRENNKRAFTMASCHINE UND HUBKOLBEN-BRENNKRAFTMASCHINE**

EXHAUST GAS TURBOCHARGER FOR A RECIPROCATING INTERNAL COMBUSTION ENGINE AND CORRESPONDING RECIPROCATING INTERNAL COMBUSTION ENGINE

TURBOCOMPRESSEUR DESTINE A UN MOTEUR A COMBUSTION INTERNE A PISTONS ALTERNATIFS ET MOTEUR A COMBUSTION INTERNE A PISTONS ALTERNATIFS

(84) Benannte Vertragsstaaten:
**DE FR GB IT SE**

(30) Priorität: **25.06.2004 DE 102004030703**

(43) Veröffentlichungstag der Anmeldung:
**07.03.2007 Patentblatt 2007/10**

(73) Patentinhaber: **Daimler AG**
**70327 Stuttgart (DE)**

(72) Erfinder:
• **FINGER, Helmut**
**70771 Leinfelden-Echterdingen (DE)**
• **SCHMID, Wolfram**
**72622 Nürtingen (DE)**
• **SUMSER, Siegfried**
**70327 Stuttgart (DE)**

(56) Entgegenhaltungen:
WO-A-20/04031552     DE-A1- 10 152 804
US-A1- 2003 115 875

**Beschreibung**

Die Erfindung bezieht sich auf einen Abgasturbolader für eine Hubkolben-Brennkraftmaschine und auf eine Hubkolben-Brennkraftmaschine nach dem Oberbegriff des Anspruches 1 bzw. des Anspruchs 7.

In der Druckschrift DE 101 52 804 A1 wird ein Abgasturbolader für eine Brennkraftmaschine beschrieben, welcher eine Abgasturbine im Abgasstrang und einen Verdichter im Ansaugtrakt umfasst, wobei das Turbinenrad von den unter Druck stehenden Abgasen der Brennkraftmaschine angetrieben wird und die Turbinenraddrehung über eine Welle auf das Verdichterrad übertragen wird, das daraufhin Umgebungsluft ansaugt und auf einen erhöhten Ladedruck verdichtet. Die Abgasturbine weist zwei Abgasfluten unterschiedlicher Größe auf, die jeweils mit den Abgasen einer von zwei Zylinderbänken der Brennkraftmaschine versorgt werden. Aufgrund der unterschiedlichen Größe der Abgasfluten stellt sich im Abgasleitungsabschnitt der kleineren Abgasflut ein höherer Abgasgegendruck ein als in dem Abgasleitungsabschnitt, über den die größere Abgasflut mit Abgasen versorgt wird. Dieser höhere Abgasgegendruck kann für eine verbesserte Abgasrückführung ausgenutzt werden, welche eine vom Abgasleitungsabschnitt der kleineren Abgasflut abzweigende Rückführleitung umfasst, die in den Ansaugtrakt einmündet. Die Abgasrückführung verbessert das Abgasverhalten, es werden insbesondere die $NO_X$-Emissionen reduziert. Darüber hinaus führt die Abgasrückführung mit asymmetrischen Turbinen zu einem günstigen Verbrauchsverhalten.

Von diesem Stand der Technik ausgehend liegt der Erfindung das Problem zugrunde, den Schadstoffausstoß und den Kraftstoffverbrauch von aufgeladenen Brennkraftmaschinen weiter zu reduzieren. Es soll insbesondere der Wirkungsgrad des Abgasturboladers für eine Brennkraftmaschine verbessert werden.

Dieses Problem wird bei einem Abgasturbolader mit den Merkmalen des Anspruches 1 und bei einer Hubkolbenbrennkraftmaschine mit den Merkmalen des Anspruches 7 gelöst. Die Unteransprüche geben zweckmäßige Weiterbildungen an.

Zur Verbesserung des Turbinenwirkungsgrades wird vorgeschlagen, dass das Durchmesserverhältnis von Turbinenraddurchmesser zum Verdichterraddurchmesser oberhalb einer linearen Funktion liegt, welche maßgeblich vom Gesamt-Hubvolumen der Brennkraftmaschine sowie einem turbinenspezifischen Asymmetriegrad abhängt, wobei der Asymmetriegrad das Verhältnis der Stopfdurchsatzparameter für die beiden Abgasfluten der Abgasturbine darstellt. Mithilfe dieser Beziehung ist sichergestellt, dass der Turbinenraddurchmesser im Vergleich zum Verdichterraddurchmesser eine definierte Mindestgröße aufweist, was den Vorteil bietet, dass die Umfangsgeschwindigkeit im Außendurchmesser des Turbinenrades ansteigt, wodurch auch der Turbinenwirkungsgrad verbessert wird. Diese Wirkungsgradverbesserung kompensiert eine prinzipbedingte Wirkungsgradverschlechterung, welche durch die asymmetrische Ausführung der beiden Abgasfluten der Abgasturbine zustande kommt. Eine derartige, asymmetrische Ausbildung der Abgasfluten ist jedoch für eine effektive Abgasrückführung erwünscht, durch die das Abgasverhalten verbessert und der Kraftstoffverbrauch günstig beeinflusst wird. Somit kann der Vorteil der Abgasrückführung mit dem Vorteil eines verbesserten Turbinenwirkungsgrades kombiniert werden. Beide Maßnahmen zusammengenommen führen zu einem verbesserten Abgas- und Verbrauchsverhalten.

In das Durchmesserverhältnis von Turbinenraddurchmesser zum Verdichterraddurchmesser fließt linear ein Parameter ein, welcher in Abhängigkeit des Gesamt-Hubvolumens der eingesetzten Brennkraftmaschine bestimmt wird. Für die Ermittlung dieses Parameters kann eine Funktion angegeben werden, die von der Wurzel vom Hubvolumen abhängt. Der Wert dieses Parameters beträgt etwa 4 % der Wurzel aus dem Gesamt-Hubvolumen der Brennkraftmaschine, gemessen in Litern.

Bei den relevanten Durchmessern von Turbinenrad und Verdichterrad handelt es sich um die jeweiligen maximalen Durchmesser. Für das Verdichterrad ist dies der Bereich des Austrittsquerschnittes, für das Turbinenrad der Bereich des Eintrittsquerschnittes.

Der Abgasturbolader wird bevorzugt für eine Hubkolben-Brennkraftmaschine eingesetzt, die mit einer Abgasrückführungseinrichtung zur Rückführung von Abgas aus dem Abgasstrang in den Ansaugtrakt ausgestattet ist. Die Rückführleitung der Abgasrückführungseinrichtung zweigt hierbei von dem Abgasstrang-Leitungsabschnitt der kleineren Abgasflut ab, in der sich ein höherer Abgasgegendruck aufbaut als im Abgasleitungsabschnitt der größeren Abgasflut. Dieser höhere Abgasgegendruck kann für eine wirksame Abgasrückführung in weiten Betriebsbereichen der Brennkraftmaschine herangezogen werden.

In zweckmäßiger Weiterbildung ist vorgesehen, dass die Abgasturbine mit einer variablen Turbinengeometrie zur Einstellung des wirksamen Turbineneintrittsquerschnittes ausgestattet ist. Bei der Turbinengeometrie handelt es sich beispielsweise um einen Leitgitterring mit verstellbaren Leitschaufeln, gegebenenfalls auch um einen Leitgitterring, welcher axial in den Turbineneintrittsquerschnitt zu verschieben ist. In jedem Fall ist die variable Turbinengeometrie zwischen einer den Strömungs- bzw. Turbineneintrittsquerschnitt minimierenden Staustellung und einer den Strömungseintrittsquerschnitt maximal freigebenden Öffnungsstellung zu verstellen. Zweckmäßig ragt die variable Turbinengeometrie in den Strömungseintrittsquerschnitt der größeren Abgasflut ein. Es kann aber zweckmäßig sein, zusätzlich oder alternativ im Strömungseintrittsquerschnitt der kleineren Abgasflut eine variable Turbinengeometrie vorzusehen.

Weitere Vorteile und zweckmäßige Ausführungen sind den weiteren Ansprüchen, der Figurenbeschreibung und den Zeichnungen zu entnehmen. Es zeigen:

Fig. 1 eine schematische Darstellung einer aufgeladenen Brennkraftmaschine mit einer zweiflutigen Abgasturbine,

Fig. 2 ein Abgasturbolader im Schnitt, wobei die Abgasturbine ebenfalls zweiflutig ausgeführt ist,

Fig. 3 ein Leitgitterring, welcher als variable Turbinengeometrie im Strömungseintrittsquerschnitt der Abgasturbine angeordnet ist,

Fig. 4 ein Schaubild mit dem Durchmesserverhältnis des Turbinenraddurchmessers zum Verdichterraddurchmesser in Abhängigkeit vom turbinenspezifischen Asymmetriegrad, welcher das Verhältnis der StopfDurchsatzparameter für die beiden Abgasfluten der Abgasturbine angibt,

Fig. 5 den Verlauf des Turbinenwirkungsgrades als Funktion der Schnelllaufzahl, die als Verhältniszahl von Umfangsgeschwindigkeit des Turbinenrades zu isentroper Geschwindigkeit des Abgases infolge der Expansion in der Turbine definiert ist.

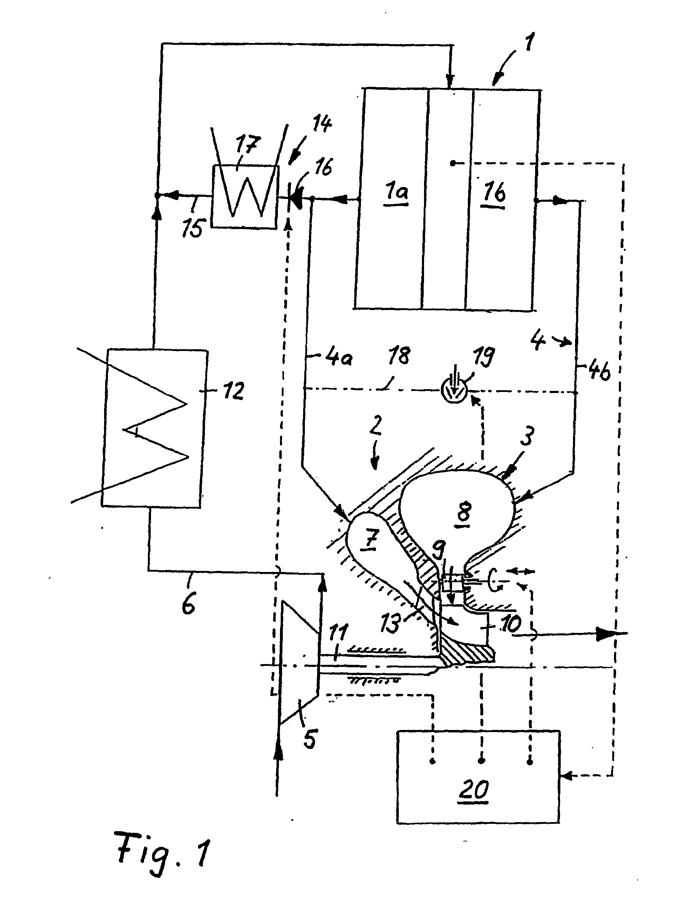

Bei der in Fig. 1 dargestellten Brennkraftmaschine 1 handelt es sich um einen Otto-Motor oder einen Dieselmotor mit zwei separaten Zylinderbänken 1a und 1b. Der Brennkraftmaschine 1 ist ein Abgasturbolader 2 mit einer Abgasturbine 3 im Abgasstrang 4 und einem Verdichter 5 im Ansaugtrakt 6 zugeordnet. Das Turbinenrad 10 der Abgasturbine 3 wird von den unter Druck stehenden Abgasen der Brennkraftmaschine angetrieben, wobei die Drehbewegung des Turbinenrades 10 über eine Welle 11 auf das Verdichterrad im Verdichter 5 übertragen wird, woraufhin Umgebungsluft in den Ansaugtrakt 6 angesaugt und auf einen erhöhten Ladedruck verdichtet wird. Die verdichtete Luft wird zunächst stromab des Verdichters 5 in einem Ladeluftkühler 12 gekühlt und anschließend im weiteren Verlauf unter Ladedruck den Zylindern der Brennkraftmaschine 1 zugeführt.

Die Abgasturbine ist zweiflutig aufgebaut und besitzt eine erste, kleinere Abgasflut 7 sowie eine zweite, größere Abgasflut 8, die jeweils über einen Strömungs- bzw. Turbineneintrittsquerschnitt mit dem Turbinenrad 10 verbunden sind. Jede der beiden Abgasfluten 7 und 8 ist über jeweils einen Abgasstrang-Leitungsabschnitt 4a bzw. 4b mit den Zylinderausgängen jeder Zylinderbank 1a bzw. 1b verbunden, so dass jeder Abgasflut 7 bzw. 8 nur die Abgase der jeweils zugeordneten Zylinderbank 1a bzw. 1b zugeführt werden.

Im Strömungseintrittsquerschnitt der größeren Abgasflut 8 ist eine variable Turbinengeometrie 9 angeordnet, welche insbesondere als Leitgitter mit verstellbaren Leitschaufeln ausgebildet ist, wobei gegebenenfalls auch ein axial verstellbares Leitgitter in Betracht kommt.

Über eine Verstellung der variablen Turbinengeometrie 9 kann der wirksame Strömungseintrittsquerschnitt zwischen einer minimalen Stauposition und einer maximalen Öffnungsposition verstellt werden.

Im Strömungseintrittsquerschnitt der kleineren Abgasflut 7 kann zur Erzielung einer verbesserten Anströmung des Turbinenrades 10 ein Festgitter 13 angeordnet sein. Unter Umständen ist aber auch im Strömungseintrittsquerschnitt der kleineren Abgasflut 7 eine variable Turbinengeometrie angeordnet.

Die in die Abgasfluten 7 und 8 eingeströmten, unter Überdruck stehen Abgase werden über die Turbineneintrittsquerschnitte auf das Turbinenrad 10 geleitet, das daraufhin in Drehbewegung versetzt wird. Im weiteren Verlauf verlassen die Abgase im entspannten Zustand axial die Abgasturbine 3.

Des Weiteren ist der Brennkraftmaschine 1 eine Abgasrückführungseinrichtung 14 zugeordnet, welche eine Rückführleitung 15, ein einstellbares Rückführventil 16 sowie einen Abgaskühler 17 umfasst. Die Rückführleitung 15 zweigt stromauf der Abgasturbine 3 von dem Leitungsabschnitt 4a des Abgasstranges ab, welcher der kleineren Abgasflut 7 zugeordnet ist, und mündet stromab des Ladeluftkühlers 12 in den Ansaugtrakt 6. Durch ein Öffnen des Rückführventils 16 kann in Betriebszuständen, in welchen im Leitungsabschnitt 4a ein Überdruck gegenüber dem Druck im Ansaugtrakt herrscht, Abgas vom Abgasstrang in den Ansaugtrakt geleitet werden.

Zwischen den beiden Leitungsabschnitten 4a und 4b des Abgasstranges 4 kann eine Überbrückungsleitung 18 verlaufen, in die ein Umblaseventil 19 integriert ist. Durch Öffnen des Umblaseventils 19 kann ein Druckausgleich zwischen den beiden Leitungsabschnitten 4a und 4b durchgeführt werden.

Über eine Regel- und Steuereinheit 20 sind sämtliche einstellbaren Aggregate der Brennkraftmaschine 1 in Abhängigkeit von Zustands- und Betriebsgrößen einzustellen, beispielsweise die variable Turbinengeometrie 9, das Rückführventil 16 und das Umblaseventil 19.

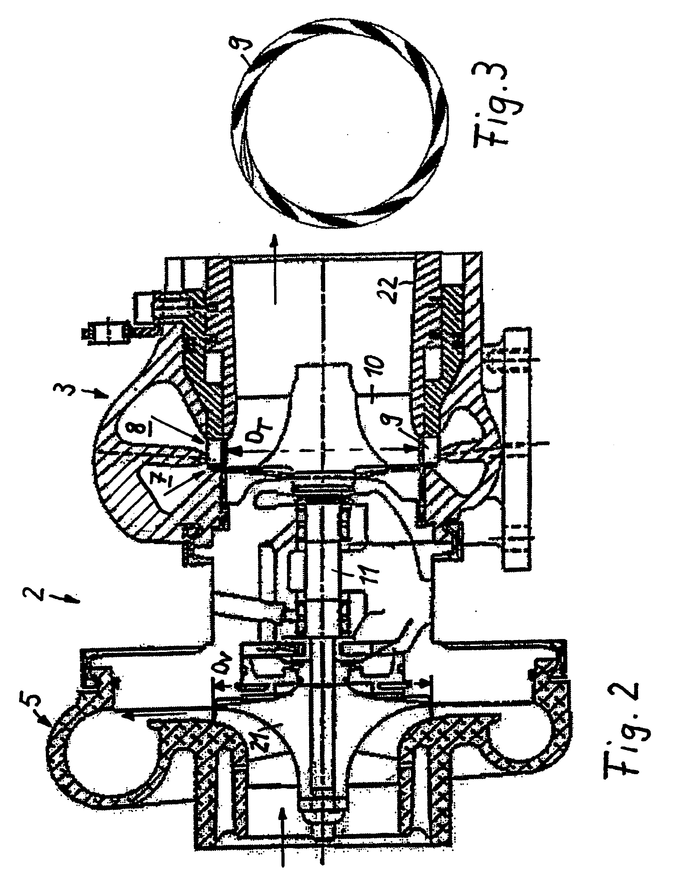

In Fig. 2 ist ein Abgasturbolader im Schnitt dargestellt. Die Abgasturbine 3 weist die zwei Abgasfluten 7 und 8 auf, welche jeweils einen radialen Strömungseintrittsquerschnitt zum Turbinenrad 10 hin besitzen; demzufolge handelt es sich bei der Turbine 3 um eine Radialturbine. Die kleinere Abgasflut 7 befindet sich auf der dem Verdichter 5 zugewandten Lagerseite des Abgasturboladers, die größere Abgasflut 8 ist dagegen dem Turbinenaustritt 22 zugewandt.

In alternativer Ausführung kann es aber auch zweckmäßig sein, zumindest eine der Abgasfluten axial oder halbaxial dem Turbinenrad vorzulagern; in diesem Fall handelt es sich um eine Kombinationsturbine. Eine derartige Turbine ist beispielsweise in Fig. 1 schematisch dargestellt.

Wie Fig. 2 weiterhin zu entnehmen, ist die variable Turbinengeometrie 9, welche sich insbesondere in dem Strömungseintrittsquerschnitt der größeren Abgasflut 8 zum Turbinenrad 10 befindet, als axial verschiebliches Leitgitter ausgeführt, welches aus einer Außerfunktionsposition außerhalb des Strömungseintrittsquerschnittes in eine Funktionsposition im Strömungseintrittsquerschnitt verschoben werden kann. Alternativ zu einer Ausführung als axial verschiebliches Leitgitter kommt auch ein Leitgitter mit verstellbaren Leitschaufeln in Betracht. Darüber hinaus ist es auch möglich, auch im Strömungseintrittsquerschnitt der kleineren Abgasflut 7 eine variable Turbinengeometrie vorzusehen. Gegebenenfalls erstreckt sich eine gemeinsame variable Turbinengeometrie über beide Strömungseintrittsquerschnitte.

Das Turbinenrad 10 besitzt im Bereich des Strömungseintrittsquerschnittes den maximalen Durchmesser $D_T$, welcher den Außendurchmesser der Turbinenradschaufeln kennzeichnet. Das Verdichterrad 21 besitzt den maximalen Außendurchmesser $D_V$ im Bereich seines radialen Strömungsaustrittes. Das Durchmesserverhältnis $D_T/D_V$ des Turbinenraddurchmessers $D_T$ zum Verdichterraddurchmesser $D_V$ folgt der Beziehung

$$D_T/D_V > J - K*Asy \quad ,$$

wobei J eine Konstante im Wertebereich zwischen 1 und 1,05 bezeichnet und bevorzugt den Wert 1,05 einnimmt. K ist ein Parameter, der vom Gesamt-Hubvolumen $V_H$ der Brennkraftmaschine gemäß der Beziehung

$$K = 0{,}15\sqrt{\frac{V_H}{14}} \approx 0{,}04\sqrt{V_H}$$

abhängt. K ist hierbei als Funktion des in Litern zu messenden Hubvolumens $V_H$ zu ermitteln. Mit Asy wird ein turbinenspezifischer Asymmetriegrad bezeichnet, der gemäß der Beziehung

$$Asy = \phi_{1,s}/\phi_{2,s}$$

als Funktion des kritischen, im Bereich der Stopfgrenze liegenden Durchsatzparameters $\phi_{1,S}$ für die erste Abgasflut 7 der Abgasturbine 3 und des entsprechenden Durchsatzparameters $\phi_{2,S}$ für die zweite Abgasflut 8 der Abgasturbine 3 zu bestimmen ist.

Die Durchsatzparameter $\phi_{1,S}$ und $\phi_{2,S}$ an der Stopfgrenze nehmen turbinenspezifische Werte ein, die für die jeweils eingesetzte Abgasturbine empirisch ermittelt bzw. gemessen werden, indem jeweils eine Abgasflut abgesperrt wird und der kritische Durchsatzparameter der zweiten, offenen Abgasflut bestimmt wird. Allgemein bestimmen sich die Durchsatzparameter $\phi$ nach dem Zusammenhang

$$\phi = \dot{m}_s \sqrt{T_s}\big/p_s \quad ,$$

wobei $\dot{m}_s$ der Abgasmassenstrom durch die Abgasflut im Bereich der Stopfgrenze der Abgasturbine ist, $T_s$ die Abgastemperatur in der Abgasflut im Bereich der Stopfgrenze und $p_s$ der Abgasdruck in der Abgasflut, ebenfalls im Bereich der Stopfgrenze.

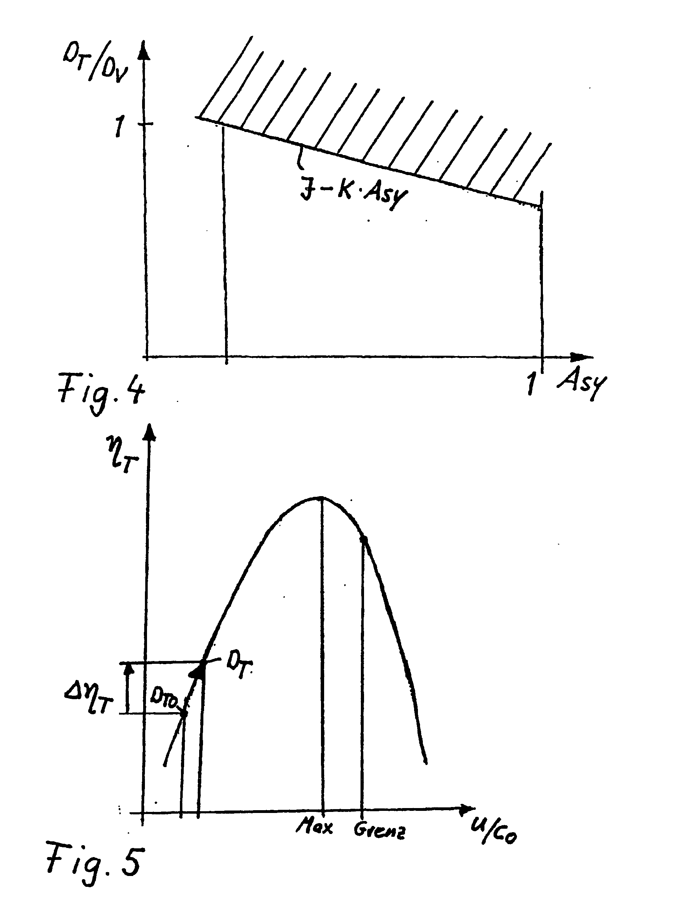

In Fig. 4 ist das beschriebene Durchmesserverhältnis $D_T$ durch $D_V$ als Funktion des Asymmetriegrades Asy dargestellt. Der bevorzugte Wertebereich, den das Durchmesserverhältnis $D_T/D_V$ einnehmen soll, liegt oberhalb einer Grenzlinie, welche von der Geraden J - K*Asy repräsentiert wird. Dieses Durchmesserverhältnis kann bei gegebenem Verdichterraddurchmesser $D_V$ als Mindest-Größenangabe bzw. als Durchmesservergrößerung für den Turbinenraddurchmesser $D_T$ aufgefasst werden. Aufgrund dieser Durchmesservergrößerung wird der Turbinenwirkungsgrad $\eta_T$ angehoben, wodurch Wirkungsgradverluste kompensiert oder gegebenenfalls auch überkompensiert werden, die durch die asymmetrische Auslegung der Abgasfluten zustande kommen.

Die Anhebung des Turbinenwirkungsgrades $\eta_T$ ist in Fig. 5 veranschaulicht. Dargestellt ist in diesem Schaubild der Verlauf des Turbinenwirkungsgrades $\eta_T$ als Funktion der Schnelllaufzahl $u/c_0$, wobei mit u die Umfangsgeschwindigkeit und mit $c_0$ die isentrope Expansionsgeschwindigkeit bezeichnet ist. Da die Umfangsgeschwindigkeit proportional zum Turbinendurchmesser $D_T$ ist, bewirkt ein Anstieg des Turbinendurchmessers auch einen Anstieg des Turbinenwirkungsgrades, was im Schaubild nach Fig. 5 beispielhaft mit dem Anstieg des Turbinendurchmessers $D_{T0}$ auf $D_T$ und damit einhergehend mit dem Anstieg des Turbinenwirkungsgrades um den Wert $\Delta\eta_T$ dargestellt ist.

Das Maximum der Wirkungsgradkurve wird im Punkt Max erreicht, der typischerweise für Abgasturbinen in einer Größenordnung von $u/c_0 = 0{,}7$ liegt. Eine sinnvolle Begrenzung für die Schnelllaufzahl liegt jenseits des Maximums des Wirkungsgrades bei $u/c_o =$ Grenz, wobei für Grenz ein Zahlenwert von etwa 0,85 zweckmäßig ist.

## Patentansprüche

1. Abgasturbolader für eine Hubkolben-Brennkraftmaschine, mit einer dem Abgasturbolader (2) zugeordneten Abgasturbine (3) im Abgasstrang (4) und einem Verdichter (5) im Ansaugtrakt (6), wobei die Abgasturbine (3) mindestens zwei Abgasfluten (7, 8) aufweist, über die dem Turbinenrad (10) Abgas zuzuführen ist,
**dadurch gekennzeichnet,**
**dass** das Durchmesserverhältnis $D_T/D_V$ des Turbinenraddurchmessers $D_T$ zum Verdichterraddurchmesser $D_V$ der Beziehung

$$D_T/D_V > J - K*Asy$$

folgt, wobei

J eine Konstante im Wertebereich zwischen 1 und 1,05
K einen vom Hubvolumen $V_H$ der Brennkraftmaschine (1) abhängigen Parameter bezeichnet, der gemäß der Beziehung

$$K = 0,15\sqrt{\frac{V_H}{14}} \approx 0,04\sqrt{V_H}$$

als Funktion des in Litern gemessenen Hubvolumens $V_H$ zu ermitteln ist, und wobei Asy einen turbinenspezifischen Asymmetriegrad bezeich-et, der gemäß der Beziehung

$$Asy = \phi_{1,s}/\phi_{2,s}$$

als Funktion des kritischen, im Bereich der Stopfgrenze liegenden Durchsatzparameters $\phi_{1,S}$ für die erste Abgasflut (7) der Abgasturbine (3) und des entsprechenden Durchsatzparameters $\phi_{2,S}$ für die zweite Abgasflut (8) der Abgasturbine (3) zu bestimmen ist.

2. Abgasturbolader nach Anspruch 1,
**dadurch gekennzeichnet,**
**dass** die beiden Abgasfluten (7, 8) unterschiedlich groß ausgebildet sind und insbesondere ein unterschiedliches Volumen aufweisen.

3. Abgasturbolader nach Anspruch 2,
**dadurch gekennzeichnet,**
**dass** die kleinere Abgasflut (7) der Abgasturbine (3) auf der dem Verdichter (5) zugewandten Lagerseite im Abgasturbolader (2) angeordnet ist.

4. Abgasturbolader nach einem der Ansprüche 1 bis 3,
**dadurch gekennzeichnet,**

**dass** die Abgasturbine (3) mit variabler Turbinengeometrie (9) zur veränderlichen Einstellung des wirksamen Turbineneintrittsquerschnitts ausgestattet ist.

5. Abgasturbolader nach Anspruch 2 oder 3 und 4,
**dadurch gekennzeichnet,**
**dass** die variable Turbinengeometrie (9) im Turbineneintrittsquerschnitt der größeren Abgasflut (8) angeordnet ist.

6. Abgasturbolader nach einem der Ansprüche 1 bis 5,
**dadurch gekennzeichnet,**
**dass** die Abgasturbine (3) als Radialturbine ausgeführt ist.

7. Hubkolben-Brennkraftmaschine mit einem Abgasturbolader nach einem der Ansprüche 1 bis 6, mit einer Abgasrückführungseinrichtung (14), die eine Rückführleitung (15) zwischen einem Abgasstrang-Leitungsabschnitt (4a), der zu einer Abgasflut führt (7), und dem Ansaugtrakt (6) der Brennkraftmaschine (1) umfasst, wobei die beiden Abgasfluten (7, 8) unterschiedlich groß ausgebildet sind und die Rückführleitung (15) von dem Abgasstrang-Leitungsabschnitt (4a) der kleineren Abgasflut (7) abzweigt.

**Claims**

1. Turbocharger for a reciprocating internal combustion engine, with an exhaust gas turbine (3) assigned to the turbocharger (2) and located in the exhaust train (4) and with a compressor (5) located in the intake train (6), wherein the exhaust gas turbine (3) comprises at least two exhaust gas streams (7, 8) via which exhaust gas is to be supplied to the turbine wheel (10),
**characterised in that**
the diameter ratio $D_T/D_V$ between the turbine wheel diameter $D_T$ and the compressor impeller diameter $D_V$ corresponds to the relation

$$D_T/D_V < J - K*Asy,$$

wherein

J is a constant in the value range between 1 and 1.5,
K is a parameter determined by the displacement $V_H$ of the internal combustion engine (1), which is to be determined in accordance with the relation

$$K = 0.15 \sqrt{\frac{VH}{14}} \approx 0.04 \sqrt{V}_H$$

as a function of the displacement $V_H$ measured in litres, and wherein

Asy is a turbine-specific degree of asymmetry, which is to be determined inaccordance with the relation

$$Asy = \phi_{1,S}/\phi_{2,S}$$

as a function of the critical throughput parameter $\phi_{1,S}$ for the first exhaust gas stream (7) of the exhaust gas turbine (3), which lies in the range of the stopping limit, and for the corresponding throughput parameter $\phi_{2,S}$ of the second exhaust gas stream (8) of the exhaust gas turbine (3).

2. Turbocharger according to claim 1,
   **characterised in that**
   the two exhaust gas streams (7, 8) are different in size and in particular in volume.

3. Turbocharger according to claim 2,
   **characterised in that**
   the smaller exhaust gas stream (7) of the exhaust gas turbine (3) is located on the bearing side in the turbocharger (3) which is adjacent to the compressor (5).

4. Turbocharger according to any of claims 1 to 3,
   **characterised in that**
   the exhaust gas turbine (3) is provided with a variable turbine geometry (9) for the variable setting of the effective turbine inlet cross-section.

5. Turbocharger according to claim 2, 3 or 4,
   **characterised in that**
   the variable turbine geometry (9) is located in the turbine inlet cross-section of the larger exhaust gas stream (8).

6. Turbocharger according to any of claims 1 to 5,
   **characterised in that**
   the exhaust gas turbine (3) is designed as a radial-flow turbine.

7. Reciprocating internal combustion engine with a turbocharger according to any of claims 1 to 6, with an exhaust gas recirculation unit (14) comprising a recirculation line (15) between an exhaust train line section (4a) leading to an exhaust gas stream (7) and the intake train (6) of the internal combustion engine (1), wherein the two exhaust gas streams (7, 8) are different in size and the recirculation line (15) branches off the exhaust train line section (4a) of the smaller exhaust gas stream (7).

## Revendications

1. Turbocompresseur à gaz d'échappement pour un moteur à combustion interne à pistons alternatifs, comprenant une turbine à gaz d'échappement (3), associée au turbocompresseur à gaz d'échappement (2), dans le circuit des gaz d'échappement (4), et un compresseur (5) dans le circuit d'aspiration (6), la turbine à gaz d'échappement (2) comprenant au moins deux volutes à gaz d'échappement (7, 8) via lesquelles le gaz d'échappement doit être admis au rotor de turbine (10),
   **caractérisé en ce que**
   le rapport $D_T/D_V$ du diamètre du rotor de turbine $D_T$ sur le diamètre du rotor de compresseur $D_V$ suit la relation

   $$D_T/D_V > J - K*Asy$$

   dans laquelle
   J est une constante dans la plage de valeur entre 1 et 1,05
   K désigne un paramètre qui dépend de la cylindrée $V_H$ du moteur thermique (1) qui doit être déterminée en tant que fonction de la cylindrée $V_H$ mesurée en litres d'après l'équation :

   $$K = 0,15 \left(V_H/14\right)^{½} \approx 0,04 \left(V_H\right)^{½}$$

   et dans laquelle
   Asy désigne un degré d'asymétrie spécifique à la turbine, qui doit être déterminé d'après l'équation

   $$Asy = \phi_{1,s}/\phi_{2,s}$$

   en tant que de fonction du paramètre de débit critique, situé dans la zone de la limite de bourrage pour la première volute à gaz d'échappement (7) de la turbine à gaz d'échappement (3) et du paramètre de débit correspondant pour la seconde volute à gaz d'échappement (8) de la turbine à gaz d'échappement (3).

2. Turbocompresseur à gaz d'échappement selon la revendication 1,
   **caractérisé en ce que** les deux volutes à gaz d'échappement (7, 8) sont réalisées de tailles différentes et présentent en particulier un volume différent.

3. Turbocompresseur à gaz d'échappement selon la revendication 2,
**caractérisé en ce que** la volute à gaz d'échappement (7) la plus petite de la turbine à gaz d'échappement (3) est agencée dans le turbocompresseur à gaz d'échappement (2) du côté palier tourné vers le compresseur (5).

4. Turbocompresseur à gaz d'échappement selon l'une des revendications 1 à 3,
**caractérisé en ce que** la turbine à gaz d'échappement (3) est équipée d'une géométrie de turbine variable (9) pour le réglage variable de la section d'entrée efficace dans la turbine.

5. Turbocompresseur à gaz d'échappement selon la revendication 2 ou 3 et 4,
**caractérisé en ce que** la géométrie de turbine variable (9) est agencée dans la section d'entrée de la turbine de la plus grande volute à gaz d'échappement (8).

6. Turbocompresseur à gaz d'échappement selon l'une des revendications 1 à 5,
**caractérisé en ce que** la turbine à gaz d'échappement (3) est réalisée comme une turbine radiale.

7. Moteur à combustion interne à pistons alternatifs comprenant un turbocompresseur à gaz d'échappement selon l'une des revendications 1 à 6, avec un système de recyclage de gaz d'échappement (14) qui comprend une conduite de recyclage (15) entre un tronçon conducteur du circuit de gaz d'échappement (4a) qui mène à une volute de gaz d'échappement (7), et le circuit d'aspiration (6) du moteur thermique (1), les deux volutes à gaz d'échappement (7, 8) étant réalisées de tailles différentes et la conduite de recyclage (15) étant ramifiée depuis le tronçon conducteur du circuit de gaz d'échappement (4a) de la volute à gaz d'échappement (7) la plus petite.

Fig. 1

Fig. 3

Fig. 2

$D_T/D_V$

1

$J - K \cdot Asy$

1  $Asy$

Fig. 4

$\eta_T$

$\Delta \eta_T$  $D_{T0}$  $D_T$

Max  Grenz  $U/C_0$

Fig. 5

## EP 1 759 102 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10152804 A1